# EUROPÄISCHE PATENTSCHRIFT

(11) **EP 4 303 107 B1**
(45) Veröffentlichungstag und Bekanntmachung des Hinweises auf die Patenterteilung: **17.09.2025**
(21) Anmeldenummer: 23183921.8
(22) Anmeldetag: 06.07.2023
(51) Int. Cl.: B62J 9/20, B62J 9/30

(54) **AUFBEWAHRUNGSVORRICHTUNG**
STORAGE DEVICE
DISPOSITIF DE RANGEMENT

(30) Priorität: 08.07.2022 DE 102022117102
(43) Veröffentlichungstag der Anmeldung: 10.01.2024
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 3 683 127
- WO-A1-2021/185779
- DE-A1- 102021 107 626
- DE-T2- 69 201 461
- DE-T2- 69 511 653
- US-A1- 2011 037 277

## Beschreibung

Die vorliegende Erfindung betrifft eine Aufbewahrungsvorrichtung zur Befestigung an einem Zweirad und ein mit einer solchen Aufbewahrungsvorrichtung ausgestattetes Zweirad.

Eine solche Aufbewahrungsvorrichtung dient zum erleichterten Transport von Gegenständen mit dem Zweirad und/oder zur sicheren Aufbewahrung von Gegenständen während eines Stillstands des Zweirads. Dafür umfassen herkömmliche Aufbewahrungsvorrichtungen einen Behälter mit einer Öffnung, die in einen Aufbewahrungsraum des Behälters mündet. Durch die besagte Öffnung kann ein Benutzer auf die in dem Aufbewahrungsraum untergebrachten Gegenstände zugreifen. Zum Verschließen dieser Öffnung umfasst die Aufbewahrungsvorrichtung einen Deckel, welcher zwischen einer Offenstellung und einer Geschlossenstellung beweglich ist. In der Offenstellung ist der Aufbewahrungsraum des Behälters zugänglich. In der Geschlossenstellung verschließt der Deckel die Öffnung des Behälters. Ferner kann die Aufbewahrungsvorrichtung eine Befestigungseinrichtung aufweisen, um den Behälter an dem Zweirad zu befestigen.

Bei solchen Aufbewahrungsvorrichtungen besteht der Wunsch, den Deckel sowohl gegen ein selbständiges Öffnen, insbesondere während der Fahrt mit dem Zweirad, als auch gegen unbefugten Zugriff, insbesondere bei Stillstand des Zweirads, sichern zu können, ohne dass der eigene Zugriff auf den Aufbewahrungsraum stärker eingeschränkt bzw. behindert wird, als dies notwendig ist. Insbesondere soll eine komfortable Handhabung möglich sein, auch wenn - etwa während eines lediglich kurzzeitigen Stillstands des Zweirads - eine Diebstahlsicherung nicht erforderlich ist.

Aufbewahrungsvorrichtungen gemäß dem Oberbegriff des Anspruchs 1 sind beispielsweise aus der gattungsgemäßen DE 695 11 653 T2, der US 2011/037277 A1, der DE 10 2021 107626 A1, der DE 692 01 461 T2 oder der EP 3 683 127 A1 bekannt.

Vor diesem Hintergrund ist es eine Aufgabe der vorliegenden Erfindung, eine Aufbewahrungsvorrichtung bereitzustellen, welche eine besonders flexible und dennoch zuverlässige Sicherung des Deckels in dessen Geschlossenstellung ermöglicht.

Diese Aufgabe wird durch eine Aufbewahrungsvorrichtung mit den Merkmalen des Anspruchs 1 gelöst. Vorteilhafte Weiterbildungen einer solchen Aufbewahrungsvorrichtung sind den abhängigen Ansprüchen zu entnehmen.

Eine erfindungsgemäße Aufbewahrungsvorrichtung umfasst zusätzlich zu den oben genannten Merkmalen einen Verschluss, der dazu ausgebildet ist, in der Geschlossenstellung des Deckels wahlweise einen Freigabezustand, einen Sicherungszustand und einen Verriegelungszustand einzunehmen. Im Freigabezustand gibt der Verschluss den Deckel für eine Bewegung in die Offenstellung frei. Im Sicherungszustand sichert der Verschluss den Deckel in der Geschlossenstellung gegen eine Bewegung in Richtung der Offenstellung. Hierfür kann beispielsweise ein Riegel vorgesehen sein, der in dem Freigabezustand und dem Sicherungszustand durch eine einfache händische Betätigung bewegt werden kann. Im Verriegelungszustand verriegelt der Verschluss bzw. ein Riegel den Deckel in der Geschlossenstellung. Somit sichert der Verschluss auch in dem Verriegelungszustand den Deckel in der Geschlossenstellung gegen eine Bewegung in Richtung der Offenstellung, wobei jedoch eine Verriegelung erfolgt, die nicht durch eine einfache lediglich händische Betätigung gelöst werden kann. Stattdessen ist dem Verschluss ein für die Entriegelung notwendiges Identmittel zugeordnet (mechanisches oder elektronisches Identmittel). Der Verschluss ist derart ausgebildet, dass dieser ohne Verwendung des zugeordneten Identmittels von dem Sicherungszustand in den Freigabezustand gebracht werden kann, jedoch nur unter Verwendung des zugeordneten Identmittels von dem Verriegelungszustand in den Freigabezustand gebracht werden kann.

Mit anderen Worten ist der Verschluss derart ausgebildet, dass dieser zur einfachen Sicherung des Deckels gegen ein selbständiges Öffnen von dem Freigabezustand in den Sicherungszustand gebracht werden kann, und umgekehrt. Ein Einsatz des zugeordneten Identmittels ist hierbei nicht notwendig. Ist jedoch eine Verriegelung des Deckels zum Zwecke des Diebstahlschutzes gewünscht, beispielsweise um den Aufbewahrungsraum des Behälters im abgestellten Zustand des Zweirads gegenüber unbefugtem Zugriff zu schützen, kann der Verschluss in den Verriegelungszustand gebracht werden. Von hier aus kann der Verschluss lediglich mithilfe des zugeordneten Identmittels entriegelt und zurück in den Freigabezustand oder Sicherungszustand gebracht werden. Dabei kann ein Benutzer frei wählen, ob er den Verschluss vom Freigabezustand lediglich in den Sicherungszustand oder in den Verriegelungszustand versetzen möchte, um den Deckel in der Geschlossenstellung zu halten. Insbesondere benötigt er zur Verriegelung des Deckels keine separat vorzusehende zusätzliche Verriegelungsvorrichtung, welche neben einem Verschluss mit lediglich dem Freigabezustand und dem Sicherungszustand vorzusehen ist. Umgekehrt benötigt ein Benutzer zum Öffnen des Deckels nicht zwangsläufig immer das zugeordnete Identmittel, sofern lediglich der Sicherungszustand zum Sichern des Deckels in der Geschlossenstellung gewählt wird.

Bei manchen Ausführungsformen ist die vorgesehene Befestigungseinrichtung dazu ausgebildet, den Behälter derart entwendungssicher an dem Zweirad zu befestigen, dass der Behälter lediglich bei geöffnetem Deckel und/oder lediglich unter Zuhilfenahme eines Werkzeugs oder eines Identmittels zerstörungsfrei von dem Zweirad gelöst werden kann. Als Identmittel zum Lösen der Befestigungseinrichtung kann beispielsweise das oben bereits genannte zugeordnete Identmittel oder ein anderes Identmittel (mechanisch oder elektronisch) fungieren.

Eine derartige Befestigungseinrichtung für eine entwendungssichere Befestigung unterscheidet sich somit von Wechselhalterungen, wie sie beispielsweise für Einkaufskörbe bekannt sind, die an der Lenkerstange eines Zweirads befestigt werden können. Dadurch kann vermieden werden, dass die Aufbewahrungsvorrichtung durch einen Dritten in unbefugter oder unauffälliger Weise von dem Zweirad gelöst wird.

Bei manchen Ausführungsformen umfasst die Befestigungseinrichtung wenigstens eine Halterung, die dazu ausgebildet ist, mit einem Gegenstück des Zweirads zusammenzuwirken. Hierdurch kann ein zuverlässiger mechanischer Sitz der Aufbewahrungsvorrichtung an dem Zweirad herbeigeführt werden.

Ergänzend oder alternativ dazu kann die Befestigungseinrichtung wenigstens eine flache oder abgewinkelte Lasche mit einer Montageöffnung umfassen, durch die ein Befestigungsmittel, beispielsweise eine Schelle, eine Schraube oder ein Niet, geführt werden kann, um den Behälter an dem Zweirad zu befestigen.

Ergänzend oder alternativ dazu kann die Befestigungseinrichtung eine Sperrmechanik, die lediglich von dem Aufbewahrungsraum des Behälters aus entsperrbar ist, und/oder ein Schloss umfassen, das dazu ausgebildet ist, den Behälter an dem Zweirad zu sichern. Hierdurch wird erreicht, dass der Behälter lediglich von dem berechtigten Benutzer zerstörungsfrei von dem Zweirad gelöst werden kann.

Diese Varianten sind besonders einfach umzusetzen und sind besonders zur ausreichenden und sicheren Befestigung des Behälters bzw. der Aufbewahrungsvorrichtung geeignet.

Der Verschluss kann einen mechanischen oder elektronischen Schließzylinder aufweisen. Ein mechanischer Schließzylinder kann als Identmittel einen Schlüssel umfassen. Der mechanische Schließzylinder kann einen im Zylindergehäuse drehbar gelagerten Zylinderkern aufweisen, der einen Antriebsabschnitt aufweisen kann, insbesondere um eine Sperre für einen Riegel des Verschlusses zu betätigen, wie nachfolgend noch erläutert wird. Der (mechanische) Schlüssel kann insbesondere in einen Schlüsselkanal des Zylinderkerns einführbar sein. Ein elektronischer Schließzylinder kann als Identmittel einen Code umfassen, der drahtlos übertragen wird, insbesondere als Funksignal (z.B. Bluetooth, NFC), beispielsweise von einem Smartphone an einen Funkempfänger des Verschlusses. Der Verschluss kann hierfür eine elektronische Auswerte- und Steuereinrichtung aufweisen. Der elektronische Schließzylinder kann insbesondere einen Elektromotor oder einen Hubmagneten als Aktor aufweisen, beispielsweise um einen Riegel des Verschlusses unmittelbar anzutreiben oder um eine Sperre (z.B. Stift) für einen Riegel anzutreiben (rotatorisch oder geradlinig).

Bei manchen Ausführungsformen umfasst der Verschluss einen Schließzylinder, der bezogen auf eine Erstreckungsebene des Deckels schräg ausgerichtet ist, beispielsweise in einem Winkel von ungefähr 45°. Beispielsweise kann der Schließzylinder - und somit eine Einführöffnung für den zugeordneten Schlüssel als Identmittel - bezogen auf eine insbesondere im Wesentlichen horizontale Deckfläche des Deckels - schräg aus einem Gehäuse des Verschlusses hervorragen. Damit kann vermieden werden, dass sich Regenwasser auf dem Schließzylinder sammelt, ohne ablaufen zu können, während gleichzeitig eine händische Betätigung des Schließzylinders mittels des zugeordneten Schlüssels komfortabel möglich ist, ohne dass dies durch die Deckfläche des Deckels behindert wird.

Erfindungsgemäß umfasst der Verschluss einen händisch betätigbaren Riegel, wobei der Riegel entlang einer Betätigungsrichtung wahlweise in eine Sicherungsposition bewegt werden kann, um den Verschluss in den Sicherungszustand zu bringen, oder über die Sicherungsposition hinaus in eine Verriegelungsposition bewegt werden kann, um den Verschluss in den Verriegelungszustand zu bringen. Eine derartige Ausgestaltung, bei welcher der Riegel ausgehend von einer Freigabeposition über eine Sicherungsposition hinaus in eine Verriegelungsposition bewegt wird, ist besonders einfach umzusetzen und intuitiv zu bedienen. Die Begriffe Freigabeposition, Sicherungsposition und Verriegelungsposition, wie sie hier und im Folgenden verwendet werden, umfassen sowohl translatorische als auch rotatorische Relativpositionen bzw. Ausrichtungen.

Bei manchen Ausführungsformen umfasst der Verschluss, wie bereits erläutert, einen Schließzylinder (mechanisch oder elektronisch). Der Schließzylinder kann dazu ausgebildet sein, in einer Sperrstellung den Riegel in der Verriegelungsposition (direkt oder indirekt, z.B. über eine Sperre) zu sperren oder wahlweise in einer Entriegelungsstellung den Riegel für eine Bewegung aus der Verriegelungsposition in Richtung der Sicherungsposition freizugeben. Dabei ist der Schließzylinder lediglich unter Verwendung des zugeordneten Identmittels aus der Sperrstellung in die Entriegelungsstellung bringbar. Eine derartige Ausgestaltung ermöglicht eine besonders einfache Bedienung und zuverlässige Funktionalität.

Bei manchen Ausführungsformen umfasst der Verschluss eine vorgespannte Sperre, die dazu ausgebildet ist, infolge einer Bewegung des Riegels aus der Sicherungsposition in die Verriegelungsposition automatisch in Eingriff mit dem Riegel zu gelangen, um den Riegel in der Verriegelungsposition zu sperren. Dabei ist durch Verbringen des Schließzylinders in die Entriegelungsstellung die Sperre außer Eingriff mit dem Riegel bringbar. Ein solcher automatischer Eingriff erleichtert weiter die Bedienung und vermeidet Fehlbedienungen.

Alternativ dazu umfasst der Verschluss eine Sperre, die dazu ausgebildet ist, durch händische Betätigung in Eingriff mit dem Riegel zu gelangen, um den Riegel in der Verriegelungsposition zu sperren. Dabei ist durch Verbringen des Schließzylinders in die Entriegelungsstellung die Sperre außer Eingriff mit dem Riegel bringbar. Eine derartige Ausgestaltung ist strukturell einfacher umzusetzen und kann eine besonders robuste Ausführung ermöglichen.

Bei manchen Ausführungsformen kann der Riegel geradlinig entlang der Betätigungsrichtung bewegbar sein. Insbesondere kann der Riegel bei manchen Ausführungsformen nach Art der Miene eines Druckkugelschreibers betätigbar sein, um ein einfaches Umschalten zwischen den verschiedenen Riegelpositionen zu ermöglichen. Derartige Ausgestaltungen sind vergleichsweise einfach und intuitiv zu bedienen.

Alternativ dazu kann der Riegel beispielsweise gemäß einer Kreisbahn entlang der Betätigungsrichtung bewegbar sein. Derartige Ausgestaltungen können besonders kompakt umzusetzen sein und sind robust auszuführen.

Bei manchen Ausführungsformen ist der Behälter starr, insbesondere aus Kunststoff und/oder Metall, ausgebildet. Eine starre Ausgestaltung ist besonders robust gegenüber externen Krafteinflüssen jeglicher Art, wie beispielsweise bei einem Sturz oder einem versuchten unbefugten Aufbrechen des Behälters.

Alternativ kann der Behälter zumindest teilweise flexibel ausgebildet sein, insbesondere aus einem Gewebe, optional mit einem zusätzlichen Gerüst und/oder einem starren Boden. Solche flexiblen Ausgestaltungen sind leicht und weniger stoßanfällig.

Bei manchen Ausführungsformen ist der Deckel zwischen seiner Offenstellung und seiner Geschlossenstellung schwenkbar an dem Behälter befestigt. Eine solche Ausgestaltung ermöglicht eine einfache Handhabung beim Öffnen des Deckels.

Bei manchen Ausführungsformen weist der Verschluss einen Griff auf. Ein solcher Griff kann insbesondere in ein Gehäuse des Verschlusses integriert sein und kann das Öffnen des Deckels in dem Freigabezustand des Verschlusses erleichtern.

Ein weiterer Aspekt der vorliegenden Erfindung betrifft ein Zweirad mit einer Vorderachse und einer Hinterachse, an welchen jeweils mindestens ein Laufrad montiert ist, und mit einer an dem Zweirad befestigten Aufbewahrungsvorrichtung entsprechend wenigstens einer der zuvor beschrieben Ausgestaltungen. Durch eine derartige Kombination können die durch die erfindungsgemäße Aufbewahrungsvorrichtung erhaltenen Vorteile effektiv genutzt werden.

Bei manchen Ausführungsformen ist das Zweirad ein Fahrrad, ein Motorrad, ein E-Bike, ein Pedelec oder ein Lastenrad.

Bei manchen Ausführungsformen weist das Zweirad wenigstens ein zusätzliches Laufrad auf, welches insbesondere an der Vorderachse oder an der Hinterachse des Zweirads vorgesehen ist. Mit anderen Worten kann das Zweirad auch mehr als zwei Laufräder aufweisen, beispielsweise als Trike oder Quad.

Die vorliegende Erfindung wird nachfolgend lediglich beispielhaft unter Bezugnahme auf die beiliegenden Zeichnungen erläutert. Dabei zeigt
- Fig. 1: eine perspektivische Teilansicht einer Aufbewahrungsvorrichtung gemäß einem Ausführungsbeispiel mit einer Verriegelung, welche einen axial verschieblichen Riegel nach Art eines Druckkugelschreiber-Mechanismus umfasst; und
- Fig. 2: schematisch die Funktion einer beispielhaften alternativen Verriegelung mit einem drehbaren Riegel.

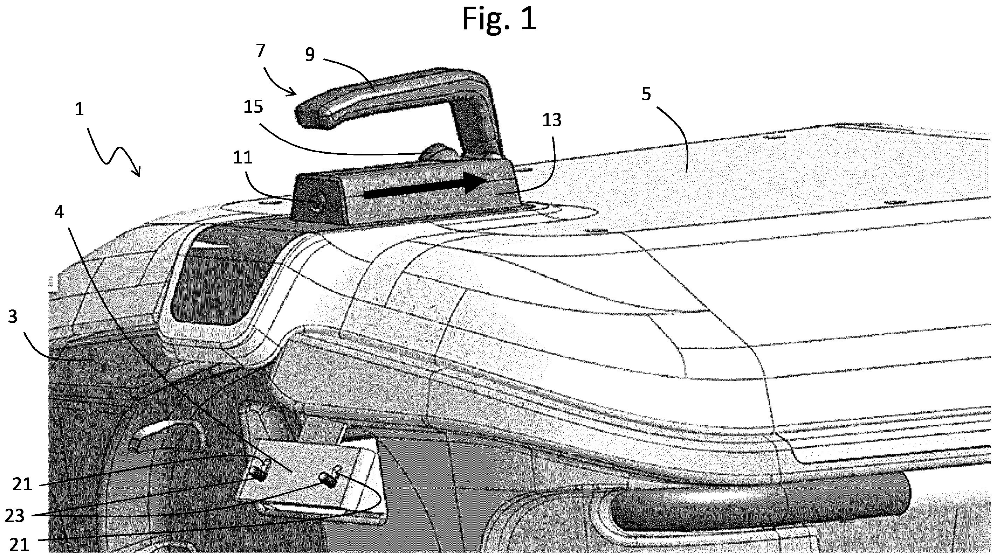

Wie in Fig. 1 gezeigt ist, umfasst eine Aufbewahrungsvorrichtung 1 einen Behälter 3, einen Deckel 5, und einen Verschluss 7. Der Behälter 3 umfasst eine hier nicht gezeigte Öffnung, durch welche auf einen Aufbewahrungsraum im Inneren des Behälters 3 zugegriffen werden kann. Der Behälter 3 ist über eine Befestigungseinrichtung 4 (weiter unten noch genauer beschrieben) an einem Zweirad (nicht gezeigt) befestigbar bzw. befestigt. Die Öffnung des Behälters 3 ist vorliegend durch den Deckel 5 verschlossen. Der Deckel 5 ist über ein Scharnier (nicht gezeigt) an dem Behälter 3 befestigt und zwischen einer Offenstellung, in welcher er die Öffnung des Behälters 3 freigibt, und einer Schließstellung (siehe Fig. 1), in welcher er die Öffnung verschließt, schwenkbar.

Der Verschluss 7 ist im gezeigten Ausführungsbeispiel mit einem Griff 9 zur erleichterten Bedienung versehen und dient dazu, den Deckel 5 in seiner Geschlossenstellung zu arretieren, nämlich zu sichern oder zu verriegeln. Bei dem gezeigten Auführungsbeispiel ist der Griff 9 direkt als Ausformung eines Gehäuses 13 des Verschlusses 7 gebildet. Es sind jedoch auch andere Ausgestaltungen möglich, wie beispielsweise mit einem an dem Gehäuse 13 montierten separaten Griff 9 oder einem von dem Verschluss 7 unabhängigen Griff.

Der Verschluss 7 kann zumindest die folgenden drei unterschiedliche Zustände einnehmen. In einem Freigabezustand gibt der Verschluss die Bewegung des Deckels 5 in dessen Offenstellung frei. Sowohl in einem Sicherungszustand als auch in einem Verriegelungszustand sichert der Verschluss den Deckel 5 in dessen Geschlossenstellung, blockiert also die Bewegung des Deckels 5 in seine Offenstellung.

Dabei unterscheiden sich der Sicherungszustand und der Verriegelungszustand dahingehend voneinander, dass ein dem Verschluss 7 zugeordnetes Identmittel (hier: ein mechanischer Schlüssel, nicht gezeigt) verwendet werden muss, um den Verschluss 7 von dem Verriegelungszustand in den Freigabezustand zu bringen. Hingegen ist es ohne Einsatz des zugeordneten Identmittels möglich, den Verschluss 7 von dessen Sicherungszustand in den Freigabezustand zu bringen. Folglich dient der Sicherungszustand zur besonders einfachen und umstandsfreien Sicherung und Entsicherung des Deckels 5 in dessen Geschlossenstellung. Der Verriegelungszustand dient zur besonders zuverlässigen Sicherung des Deckels 5 in dessen Geschlossenstellung und insbesondere auch zur Diebstalsicherung von Gegenständen, welche in dem Aufbewahrungsraum des Behälters 3 gelagert sind. Jedoch ist in dem Verriegelungszustand die Entriegelung auch für den berechtigten Benutzer aufwendiger, da dieser hierfür insbesondere das zugeordnete Identmittel benötigt.

Im gezeigten Beispiel umfasst der Verschluss 7 einen händisch betätigbaren Riegel 11, welcher in Längsrichtung des Gehäuses 13 des Verschlusses 7 (also entlang einer entsprechenden Betätigungsrichtung) von einer dem Freigabezustand zugeordneten Freigabeposition in eine dem Sicherungszustand zugeordnete Sicherungsposition (vorliegend abgebildet) beweglich ist (siehe den Pfeil in Fig. 1). Um den Riegel 11 in eine dem Verriegelungszustand zugeordnete Verriegelungsposition zu bewegen, ist der Riegel 11 weiter über die Sicherungsposition hinaus in das Gehäuse 13 verschieblich (weiter entlang des Pfeils in Fig. 1).

Der gezeigte Verschluss 7 weist ferner einen Schließzylinder 15 auf, welcher in eine Sperrstellung und in eine Entriegelungsstellung bringbar ist. In der Sperrstellung sperrt der Schließzylinder 15 den Riegel gegen eine Bewegung, insbesondere gegen eine Bewegung aus der Verriegelungsposition in Richtung der Freigabeposition oder der Sicherungsposition. In der Entriegelungsstellung gibt der Schließzylinder 15 die Bewegung des Riegels 11 aus dessen Verriegelungsposition frei. Dabei kann der Schließzylinder 15 lediglich unter Verwendung des zugeordneten Schlüssels als Identmittel aus seiner Sperrstellung in seine Entriegelungsstellung gebracht werden.

Für die erläuterte Sperrfunktion kann der Verschluss 7 eine vorgespannte Sperre (hier nicht gezeigt) umfassen, welche beispielsweise mit einem Antriebsabschnitt eines drehbaren Zylinderkerns des Schließzylinders 15 antriebswirksam gekoppelt sein kann. Die Sperre kann in Reaktion auf eine Bewegung des Riegels 11 von dessen Sicherungsposition in dessen Verriegelungsposition automatisch in den Riegel 11 bzw. in eine Sperrvertiefung des Riegels 11 eingreifen, um den Riegel 11 in der Verriegelungsposition zu sperren. Hierfür kann beispielsweise vorgesehen sein, dass bei einer Bewegung des Riegels 11 aus der Sicherungsposition in die Verriegelungsposition die Sperre kurzzeitig entgegen einer Federbelastung zurückgedrängt wird (insbesondere aufgrund zusammenwirkender Einführschrägen an der Riegelspitze und an der Sperre), wobei die Sperre nachfolgend in die genannte Sperrvertiefung des Riegels 11 einschnappt. Unter Zuhilfenahme des zugeordneten Schlüssels kann der Schließzylinder 15 dann zurück in die Entriegelungsstellung verbracht werden, um die Sperre wieder von dem Riegel 11 zu lösen und den Riegel 11 damit freizugeben. Insbesondere kann der Antriebsabschnitt des drehbaren Zylinderkerns des Schließzylinders 15 die Sperre entgegen der Federbelastung aus der genannten Sperrvertiefung des Riegels 11 zurückziehen. Der Riegel 11 kann bei einer derartigen Ausführungsform optional ebenfalls vorgespannt sein, damit der Riegel 11 sich nach einem derartigen Freigeben bzw. Entriegeln automatisch wieder in Richtung der Sicherungsposition bewegt.

Alternativ dazu kann der Verschluss 7 eine Sperre (nicht gezeigt) umfassen, welche durch aktive händische Betätigung in Eingriff mit dem Riegel 11 bringbar ist, um den Riegel 11 in seiner Verriegelungsposition zu sperren. Auch hier kann dann unter Zuhilfenahme des zugeordneten Schlüssels der Schließzylinder 15 wieder zurück in die Entriegelungsstellung verbracht werden, um die Sperre von dem Riegel 11 zu lösen und den Riegel 11 damit freizugeben.

Zum erleichterten Zugriff auf den Schließzylinder 15, welcher an dem Gehäuse 13 unterhalb des Griffs 9 angeordnet ist, ragt der Schließzylinder schräg, insbesondere in einem Winkel von ca. 45°, bezogen auf eine im wesentlichen horizontale Deckfläche des Deckels 5, aus dem Gehäuse 13 des Verschlusses 7 hervor.

In dem in FIG. 1 gezeigten Ausführungsbeispiel ist der Riegel 11 geradlinig entlang dessen Betätigungsrichtung bewegbar, also axial entlang der Längsachse des Riegels 11 und des Gehäuses 13 des Verschlusses 7.

Insbesondere kann der Riegel 11 dabei nach Art der Miene eines Druckkugelschreibers betätigbar sein, wie dies beispielsweise in der DE 101 01 767 A1 gezeigt und beschrieben ist. Konkret ist der Riegel 11 dazu ausgebildet, bei einmaligem Überschreiten eines Einrastpunktes, welcher die Sicherungsposition des Riegels 11 definiert einzurasten. Wird der Riegel 11 anschließend wieder lediglich knapp über diesen ersten Einrastpunkt hinausbewegt und losgelassen, wird der Riegel 11 durch eine Feder (nicht gezeigt) an der Sicherungsposition vorbei zurück in seine Freigabeposition bewegt. Wird dahingegen der Riegel 11 deutlich über den Einrastpunkt hinausbewegt, kann dieser an der hinter dem besagten Einrastpunkt liegenden Verriegelungsposition von der oben beschriebenen Sperre des Schließzylinders 15 gegriffen und gesperrt werden.

Alternativ zu dem mechanischen Schließzylinder 15 gemäß Fig. 1 kann der Verschluss 7 einen elektronischen Schließzylinder aufweisen, beispielsweise mit einem Elektromotor (insbesondere Getriebemotor) für einen Drehantrieb eines Antriebsabschnitts sowie mit einem drahtlos übertragenen Code als Identmittel.

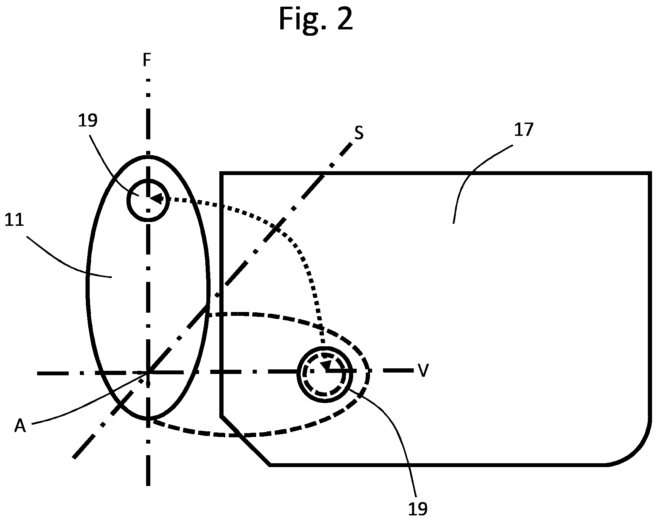

Alternativ zu der geradlinigen Beweglichkeit des Riegels 11 gemäß Fig. 1 kann der Riegel 11 auch rotatorisch, also gemäß einer Kreisbahn entlang der Betätigungsrichtung bewegbar sein. Eines solche Ausgestaltung ist in Fig. 2 skizziert.

Bei dem in Fig. 2 illustrierten Ausführungsbeispiel ist der Riegel 11 aus einer Freigabeposition F um eine Achse A herum in seine Sicherungsposition S und seine Verriegelungsposition V drehbar, also innerhalb der Darstellungsebene. Für eine händische Drehbetätigung kann der Riegel 11 mit einer Drehhandhabe verbunden sein (nicht gezeigt). In der Freigabeposition F ist der Riegel 11 in einer Richtung senkrecht zur Bildebene frei an einer Sicherungsplatte 17 vorbei beweglich, also aus der Darstellungsebene heraus. Sowohl in der Sicherungsposition S als auch in der Verriegelungsposition V hintergreift der Riegel 11 die Sicherungsplatte 17, welche an dem Behälter oder dem Deckel befestigt ist. Dabei weisen sowohl der Riegel 11 als auch die Sicherungsplatte 17 jeweils eine Sperröffnung 19 auf, welche in der Verriegelungsposition V fluchten. Zur Verrieglung wird eine entsprechende Sperre (nicht gezeigt), beispielsweise in Gestalt eines Stifts, durch die beiden Sperröffnungen 19 hindurchbewegt, insbesondere senkrecht zu der Darstellungsebene. Beispielsweise kann eine solche Sperre durch einen Druckzylinder angetrieben und gehalten werden. Unter Einsatz des zugeordneten Schlüssels kann die Sperre, also beispielsweise der Stift, dann wieder zumindest aus der Sperröffnung 19 des Riegels 11 herausbewegt werden, um den Riegel 11 freizugeben.

Eine detailliertere Beschreibung eines solchen Druckzylinders ist beispielsweise der DE 10 2018 131 779 A1 zu entnehmen. Alternativ zu einem mechanischen Schließzylinder kann der Verschluss 7 wiederum einen elektronischen Schließzylinder aufweisen, beispielsweise mit einem Hubmagneten für einen Linearantrieb eines Sperrstifts sowie mit einem drahtlos übertragenen Code als Identmittel.

Der Behälter 3 (Fig. 1) kann im Wesentlichen starr, beispielsweise aus Kunststoff oder Metall, oder zumindest bereichsweise flexibel, beispielsweise aus einem Gewebe, ausgebildet sein.

Die Befestigungsreinrichtung 4 ist dabei bevorzugt dazu ausgebildet, den Behälter 3 entwendungssicher an dem Zweirad zu befestigen. Das bedeutet, dass der Behälter 3 lediglich bei geöffnetem Deckel 5 und/oder lediglich unter Zuhilfenahme eines Werkzeugs oder eine Identmittels, beispielsweise in Gestalt des zugeordneten oder eines anderen Schlüssels, zerstörungsfrei von dem Zweirad gelöst werden kann.

In bevorzugten Ausgestaltungen umfasst die Befestigungseinrichtung 4 eine Halterung, die beispielsweise wenigstens eine Klammer und/oder wenigstens eine flache oder abgewinkelte Lasche aufweisen kann. Eine Klammer kann beispielsweise dazu ausgebildet sein, einen Rahmenabschnitt des Zweirads zu umgreifen. Eine Lasche kann beispielsweise dazu ausgebildet sein, mit einem zugeordneten Gegenstück des Zweirads (nicht gezeigt) zusammenzuwirken, zum Beispiel durch ein Einhängen oder Eingreifen. Eine entwendungssichere Befestigung des Behälters 3 an dem Zweirad kann beispielsweise durch Befestigungsmittel erfolgen, die lediglich durch die Verwendung von Werkzeug gelöst werden können, so dass ein schnelles und unauffälliges Lösen des Behälters 3 von dem Zweirad nicht möglich ist. Vorzugsweise sind die Befestigungsmittel lediglich von dem Aufbewahrungsraum des Behälters 3 aus zugänglich.

Bei dem in Fig. 1 gezeigten Ausführungsbeispiel umfasst die Befestigungseinrichtung 4 eine Sperrmechanik, die zwei Sperrstifte 23 aufweist, die mit einem zugeordneten Gegenstück des Zweirads (nicht gezeigt) zusammenwirken. Die Sperrstifte 23 sind lediglich von dem Aufbewahrungsraum des Behälters 3 aus betätigbar, um ein Entsperren zu bewirken, wobei die Sperrstifte 23 sich entlang von länglichen Stiftöffnungen 21 bewegen. Dies kann nur durch den berechtigten Benutzer ausgelösten werden, nämlich wenn der Deckel 5 sich in der Offenstellung befindet und der Aufnahmeraum des Behälters 3 somit zugänglich ist. Alternativ könnte beispielsweise auch ein Schloss vorgesehen sein, um den Behälter 3 an dem Zweirad zu sichern, wobei das Schloss von außen betätigbar sein kann (mittels eines zugeordneten Identmittels, beispielsweise eines Schlüssels bzw. des genannten Schlüssels für den Schließzylinder 15).

## Patentansprüche

1. Aufbewahrungsvorrichtung (1) zur Befestigung an einem Zweirad, wobei die Aufbewahrungsvorrichtung (1) umfasst:
einen Behälter (3) mit einer Öffnung, die in einen Aufbewahrungsraum des Behälters (3) mündet; und
einen Deckel (5), welcher zwischen einer Offenstellung, in der die Öffnung des Behälters (3) zugänglich ist, und einer Geschlossenstellung, in der die Öffnung des Behälters (3) verschlossen ist, beweglich ist;
wobei die Aufbewahrungsvorrichtung (1) einen Verschluss (7) umfasst, der dazu ausgebildet ist, in der Geschlossenstellung des Deckels (5) wahlweise einen der drei folgenden Zustände einzunehmen:
a) einen Freigabezustand, in welchem der Verschluss (7) den Deckel (5) für eine Bewegung in die Offenstellung freigibt;
b) einen Sicherungszustand, in welchem der Verschluss (7) den Deckel (5) in der Geschlossenstellung sichert; und
c) einen Verriegelungszustand, in welchem der Verschluss (7) den Deckel (5) in der Geschlossenstellung verriegelt;
wobei dem Verschluss (7) ein Identmittel zugeordnet ist;
wobei der Verschluss (7) derart ausgebildet ist, dass dieser ohne Verwendung des zugeordneten Identmittels von dem Sicherungszustand in den Freigabezustand gebracht werden kann, jedoch nur unter Verwendung des zugeordneten Identmittels von dem Verriegelungszustand in den Freigabezustand gebracht werden kann;
wobei der Verschluss (7) einen händisch betätigbaren Riegel (11) umfasst;
**dadurch gekennzeichnet, dass**
der Riegel (11) entlang einer Betätigungsrichtung wahlweise in eine Sicherungsposition bewegt werden kann, um den Verschluss (7) in den Sicherungszustand zu bringen, oder über die Sicherungsposition hinaus in eine Verriegelungsposition bewegt werden kann, um den Verschluss (7) in den Verriegelungszustand zu bringen.

2. Aufbewahrungsvorrichtung (1) nach Anspruch 1,
mit einer Befestigungseinrichtung (4), welche dazu ausgebildet ist, den Behälter (3) derart entwendungssicher an dem Zweirad zu befestigen, dass der Behälter (3) lediglich bei geöffnetem Deckel (5) und/oder unter Zuhilfenahme eines Werkzeugs oder eines Identmittels zerstörungsfrei von dem Zweirad gelöst werden kann.

3. Aufbewahrungsvorrichtung (1) nach Anspruch 2,
wobei die Befestigungseinrichtung (4) wenigstens eine Halterung umfasst, die dazu ausgebildet ist, mit einem Gegenstück des Zweirads zusammenzuwirken;
und/oder
wobei die Befestigungseinrichtung (4) wenigstens eine flache oder abgewinkelte Lasche mit einer Montageöffnung umfasst, durch die ein Befestigungsmittel führbar ist, um den Behälter (3) an dem Zweirad zu befestigen; und/oder
wobei die Befestigungseinrichtung (4) eine Sperrmechanik aufweist, die lediglich von dem Aufbewahrungsraum des Behälters (3) aus entsperrbar ist; und/oder
wobei die Befestigungseinrichtung (4) ein Schloss umfasst, das dazu ausgebildet ist, den Behälter (3) an dem Zweirad zu sichern.

4. Aufbewahrungsvorrichtung (1) nach einem der vorhergehenden Ansprüche, wobei der Verschluss (7) einen Schließzylinder (15) umfasst, der dazu ausgebildet ist, in einer Sperrstellung den Riegel (11) in der Verriegelungsposition zu sperren oder wahlweise in einer Entriegelungsstellung den Riegel (11) für eine Bewegung aus der Verriegelungsposition in Richtung der Sicherungsposition freizugeben, wobei der Schließzylinder (15) lediglich unter Verwendung des zugeordneten Identmittels aus der Sperrstellung in die Entriegelungsstellung bringbar ist.

5. Aufbewahrungsvorrichtung (1) nach Anspruch 4,
wobei der Verschluss (7) eine vorgespannte Sperre umfasst, die dazu ausgebildet ist, infolge einer Bewegung des Riegels (11) aus der Sicherungsposition in die Verriegelungsposition automatisch in Eingriff mit dem Riegel (11) zu gelangen, um den Riegel (11) in der Verriegelungsposition zu sperren, wobei durch Verbringen des Schließzylinders (15) in die Entriegelungsstellung die Sperre außer Eingriff mit dem Riegel (11) bringbar ist.

6. Aufbewahrungsvorrichtung (1) nach Anspruch 4,
wobei der Verschluss (7) eine Sperre umfasst, die dazu ausgebildet ist, durch händische Betätigung in Eingriff mit dem Riegel (11) zu gelangen, um den Riegel (11) in der Verriegelungsposition zu sperren, wobei durch Verbringen des Schließzylinders (15) in die Entriegelungsstellung die Sperre außer Eingriff mit dem Riegel (11) bringbar ist.

7. Aufbewahrungsvorrichtung (1) nach einem der vorhergehenden Ansprüche,
wobei der Riegel (11) geradlinig entlang der Betätigungsrichtung bewegbar und insbesondere nach Art der Miene eines Druckkugelschreibers betätigbar ist; oder
wobei der Riegel (11) gemäß einer Kreisbahn entlang der Betätigungsrichtung bewegbar ist.

8. Aufbewahrungsvorrichtung (1) nach einem der vorhergehenden Ansprüche, wobei der Behälter (3) starr, insbesondere aus Kunststoff oder Metall, oder zumindest teilweise flexibel, insbesondere aus einem Gewebe, ausgebildet ist.

9. Aufbewahrungsvorrichtung (1) nach einem der vorhergehenden Ansprüche, wobei der Deckel (5) zwischen seiner Offenstellung und seiner Geschlossenstellung schwenkbar an dem Behälter (3) befestigt ist.

10. Aufbewahrungsvorrichtung (1) nach einem der vorhergehenden Ansprüche, wobei der Verschluss (7) einen Griff (9) aufweist, der insbesondere in ein Gehäuse (13) des Verschlusses (7) integriert ist.

11. Zweirad mit einer Vorderachse und einer Hinterachse, an welchen jeweils mindestens ein Laufrad montiert ist, und einer an dem Zweirad befestigten Aufbewahrungsvorrichtung (1) nach einem der vorhergehenden Ansprüche.

## Claims

1. A storage apparatus (1) for mounting to a two-wheeler, wherein the storage apparatus (1) comprises:
a container (3) having an opening which opens into a storage space of the container (3); and
a lid (5) which is movable between an open position, in which the opening of the container (3) is accessible, and a closed position, in which the opening of the container (3) is closed;
wherein the storage apparatus (1) comprises a closure (7) which is configured to selectively occupy one of the following three states in the closed position of the lid (5):
a) a releasing state in which the closure (7) releases the lid (5) for movement to the open position;
b) a securing state in which the closure (7) secures the lid (5) in the closed position; and
c) a locking state in which the closure (7) locks the lid (5) in the closed position;
wherein an identification means is associated with the closure (7);
wherein the closure (7) is configured such that it can be brought from the securing state to the releasing state without using the associated identification means, but can only be brought from the locking state to the releasing state by using the associated identification means,
wherein the closure (7) comprises a manually operable latch (11),
**characterized in that**
the latch (11) can be moved along an actuation direction selectively to a securing position in order to bring the closure (7) into the securing state, or can be moved beyond the securing position to a locking position in order to bring the closure (7) into the locking state.

2. A storage apparatus (1) according to claim 1,
having a mounting device (4) which is configured for mounting the container (3) to the two-wheeler in a theft-proof manner such that the container (3) can be removed non-destructively from the two-wheeler only when the lid (5) is open and/or with the aid of a tool or an identification means.

3. A storage apparatus (1) according to claim 2,
wherein the mounting device (4) comprises at least one holder which is configured to cooperate with a counterpart of the two-wheeler;
and/or
wherein the mounting device (4) comprises at least one flat or angled tab having a mounting opening through which a mounting means can be led in order to mount the container (3) to the two-wheeler;
and/or
wherein the mounting device (4) comprises a locking mechanism which can only be unlocked from the storage space of the container (3);
and/or
wherein the mounting device (4) comprises a lock which is configured to secure the container (3) to the two-wheeler.

4. A storage apparatus (1) according to any one of the preceding claims, wherein the closure (7) comprises a locking cylinder (15) which is configured such that, in a locked position, the locking cylinder (15) locks the latch (11) in the locking position or selectively, in an unlocked position, it releases the latch (11) for movement from the locking position in the direction of the securing position, wherein the locking cylinder (15) can only be brought from the locked position into the unlocked position by using the associated identification means.

5. A storage apparatus (1) according to claim 4,
wherein the closure (7) comprises a biased catch which is configured to automatically engage with the latch (11) as a result of movement of the latch (11) from the securing position to the locking position, in order to lock the latch (11) in the locking position, wherein the catch can be disengaged from the latch (11) by moving the lock cylinder (15) into the unlocked position.

6. A storage apparatus (1) according to claim 4,
wherein the closure (7) comprises a catch which is configured to engage with the latch (11) by manual actuation, in order to lock the latch (11) in the locking position, wherein the catch can be disengaged from the latch (11) by moving the lock cylinder (15) into the unlocked position.

7. A storage apparatus (1) according to any one of the preceding claims,
wherein the latch (11) is movable in a straight line along the actuation direction and in particular can be operated in the manner of the ink cartridge of a retractable ballpoint pen; or
wherein the latch (11) is movable in accordance with a circular path along the actuation direction.

8. A storage apparatus (1) according to any one of the preceding claims, wherein the container (3) is formed rigidly, in particular made of plastic or metal, or is at least partially flexible, in particular made of a fabric.

9. A storage apparatus (1) according to any one of the preceding claims, wherein the lid (5) is pivotally mounted to the container (3) between its open position and its closed position.

10. A storage apparatus (1) according to any one of the preceding claims, wherein the closure (7) comprises a handle (9), which in particular is integrated into a housing (13) of the closure (7).

11. A two-wheeler having a front axle and a rear axle, on each of which at least one wheel is mounted, and a storage apparatus (1) according to any one of the preceding claims which is mounted to the two-wheeler.

## Revendications

1. Dispositif de rangement (1) destiné à être fixé à un deux-roues, le dispositif de rangement (1) comprenant :
un conteneur (3) doté d'une ouverture qui débouche dans un espace de rangement du conteneur (3) ; et
un couvercle (5) mobile entre une position ouverte, dans laquelle l'ouverture du conteneur (3) est accessible, et une position fermée dans laquelle l'ouverture du conteneur (3) est obturée ;
dans lequel
le dispositif de rangement (1) comprend une fermeture (7) conçue pour adopter sélectivement l'un des trois états suivants, lorsque le couvercle (5) est en position fermée :
a) un état de libération, dans lequel la fermeture (7) libère le couvercle (5) pour un mouvement vers la position ouverte ;
b) un état de sécurisation, dans lequel la fermeture (7) sécurise le couvercle (5) en position fermée ; et
c) un état de verrouillage, dans lequel la fermeture (7) verrouille le couvercle (5) en position fermée ;
un moyen d'identification est associé à la fermeture (7) ;
la fermeture (7) est conçue de manière à pouvoir passer de l'état de sécurisation à l'état de libération sans utiliser le moyen d'identification associé,
mais de manière à pouvoir passer de l'état de verrouillage à l'état de libération uniquement à l'aide du moyen d'identification associé ;
la fermeture (7) comprend un verrou (11) à actionner à la main ;
**caractérisé en ce que**
le verrou (11) peut être déplacé le long d'une direction d'actionnement sélectivement vers une position de sécurisation, afin d'amener la fermeture (7) dans l'état de sécurisation, ou peut être déplacé au-delà de la position de sécurisation jusque dans une position de verrouillage, afin d'amener la fermeture (7) dans l'état de verrouillage.

2. Dispositif de rangement (1) selon la revendication 1,
comprenant un organe de fixation (4) qui est conçu pour fixer le conteneur (3) au deux-roues de manière à le protéger contre le vol, de telle sorte que le conteneur (3) ne puisse être détaché du deux-roues sans être endommagé que lorsque le couvercle (5) est ouvert et/ou à l'aide d'un outil ou d'un moyen d'identification.

3. Dispositif de rangement (1) selon la revendication 2,
dans lequel l'organe de fixation (4) comprend au moins un support conçu pour coopérer avec un élément antagoniste du deux-roues ;
et/ou
l'organe de fixation (4) comprend au moins une languette plate ou coudée dotée d'une ouverture de montage permettant de faire passer un moyen de fixation pour fixer le conteneur (3) au deux-roues ;
et/ou
l'organe de fixation (4) comprend un mécanisme de blocage qui ne peut être débloqué que depuis l'espace de rangement du conteneur (3) ;
et/ou
l'organe de fixation (4) comprend une serrure conçue pour sécuriser le conteneur (3) sur le deux-roues.

4. Dispositif de rangement (1) selon l'une des revendications précédentes, dans lequel la fermeture (7) comprend un cylindre de serrure (15) conçu pour, en position de blocage, bloquer le verrou (11) dans la position de verrouillage ou pour libérer sélectivement, en position de déverrouillage, le verrou (11) en vue d'un mouvement de la position de verrouillage en direction de la position de sécurisation, le cylindre de serrure (15) pouvant être amené de la position de blocage vers la position de déverrouillage uniquement à l'aide du moyen d'identification associé.

5. Dispositif de rangement (1) selon la revendication 4,
dans lequel la fermeture (7) comprend un loquet précontraint conçu pour automatiquement venir en prise avec le verrou (11) suite à un mouvement du verrou (11) de la position de sécurisation à la position de verrouillage, afin de bloquer le verrou (11) en position de verrouillage, le loquet pouvant être mis hors de prise avec le verrou (11) par un déplacement du cylindre de serrure (15) vers la position de déverrouillage.

6. Dispositif de rangement (1) selon la revendication 4,
dans lequel la fermeture (7) comprend un loquet conçu pour venir en prise avec le verrou (11) par un actionnement à la main, afin de bloquer le verrou (11) en position de verrouillage, le loquet pouvant être mis hors de prise avec le verrou (11) par un déplacement du cylindre de serrure (15) vers la position de déverrouillage.

7. Dispositif de rangement (1) selon l'une des revendications précédentes,
dans lequel le verrou (11) est mobile en ligne droite le long de la direction d'actionnement et peut être actionné en particulier à la manière d'une cartouche d'un stylo à bille ; ou
le verrou (11) est mobile sur une trajectoire circulaire le long de la direction d'actionnement.

8. Dispositif de rangement (1) selon l'une des revendications précédentes, dans lequel le conteneur (3) est rigide, en particulier en matière plastique ou en métal, ou au moins partiellement flexible, en particulier en tissu.

9. Dispositif de rangement (1) selon l'une des revendications précédentes, dans lequel le couvercle (5) est fixé au conteneur (3) de manière à pouvoir pivoter entre sa position ouverte et sa position fermée.

10. Dispositif de rangement (1) selon l'une des revendications précédentes, dans lequel la fermeture (7) comprend une poignée (9) qui est en particulier intégrée dans un boîtier (13) de la fermeture (7).

11. Deux-roues comportant un essieu avant et un essieu arrière, sur chacun desquels est montée au moins une roue, et comprenant un dispositif de rangement (1) selon l'une des revendications précédentes, fixé au deux-roues.
